(19) Europäisches Patentamt / European Patent Office / Office européen des brevets

(11) **EP 4 344 227 B1**

(12) **EUROPEAN PATENT SPECIFICATION**

(45) Date of publication and mention
of the grant of the patent:
**27.08.2025   Bulletin 2025/35**

(21) Application number: **22827452.8**

(22) Date of filing: **15.06.2022**

(51) International Patent Classification (IPC):
*G06T 3/4007* (2024.01)   *H04N 19/587* (2014.01)
*H04N 21/44* (2011.01)   *H04N 21/422* (2011.01)
*H04N 21/2343* (2011.01)   *H04N 21/4402* (2011.01)

(52) Cooperative Patent Classification (CPC):
**H04N 21/440281; G06T 3/4007; H04N 19/587;
H04N 21/234381; H04N 21/42202;** H04N 19/537

(86) International application number:
**PCT/CN2022/098955**

(87) International publication number:
**WO 2022/267957 (29.12.2022 Gazette 2022/52)**

(54) **VIDEO FRAME INTERPOLATION METHOD AND APPARATUS, AND DEVICE**

VERFAHREN UND VORRICHTUNG ZUR VIDEORAHMENINTERPOLATION UND VORRICHTUNG

PROCÉDÉ ET APPAREIL D'INTERPOLATION DE TRAMES VIDÉO, ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **21.06.2021   CN 202110687105**

(43) Date of publication of application:
**27.03.2024   Bulletin 2024/13**

(73) Proprietor: **Huawei Technologies Co., Ltd.
Shenzhen, Guangdong 518129 (CN)**

(72) Inventors:
• **ZHANG, Ziyang
Shenzhen, Guangdong 518129 (CN)**
• **HE, Weihua
Shenzhen, Guangdong 518129 (CN)**
• **YANG, Chen
Shenzhen, Guangdong 518129 (CN)**
• **LIAO, Jianxing
Shenzhen, Guangdong 518129 (CN)**
• **TIAN, Kun
Shenzhen, Guangdong 518129 (CN)**

• **WANG, Ying
Shenzhen, Guangdong 518129 (CN)**
• **ZHAN, Yunlong
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
**CN-A- 101 197 999      CN-A- 101 207 707
CN-A- 109 922 372      CN-A- 111 405 316
CN-A- 111 901 598      CN-A- 111 951 313
US-A1- 2018 308 253**

• **STEPAN TULYAKOV ET AL: "TimeLens: Event-based Video Frame Interpolation", ARXIV.ORG, CORNELL UNIVERSITY LIBRARY, 201 OLIN LIBRARY CORNELL UNIVERSITY ITHACA, NY 14853, 14 June 2021 (2021-06-14), XP081989065**

EP 4 344 227 B1

**Description**

**TECHNICAL FIELD**

Embodiments of this disclosure mainly relate to the multimedia processing field, and more specifically, to a video frame interpolation model training method and apparatus.

**BACKGROUND**

"Video frame interpolation" refers to prediction and interpolation of one or more intermediate frames between original adjacent frames to obtain a video with a higher frame rate. Currently, a video frame interpolation technology has attracted much attention. It breaks through a time resolution limit of a recorded video and has great potential in many tasks such as slow-mo generation, video editing, and virtual reality. For example, people have increasingly high requirements on a frame rate and content richness of a video image on a terminal device, but an ordinary camera cannot provide a video with a high frame rate because a frame rate of a video shot by the ordinary camera is bound by a limit of a physical mechanism. Therefore, the video frame interpolation technology is required to enhance the video image on the terminal device. In addition, it is clear that mainstream movies have low frame rates. When refresh rates are high, incoherent and blurred pictures are prone to occur in some high-speed scenarios. This greatly affects user experience. In this case, the dynamic video frame interpolation technology may be used to provide a video with a higher frame rate. Further, the dynamic video frame interpolation technology can also resolve a problem of lack of content of a video with a high frame rate on a mobile phone.
Further, the document Stepan Tulyakov et. al.: "Timelens: Event-based Video frame Interpolation", Arxiv.org, Cornell University Library, June 14, 2021 refers to event-based video frame interpolation.

**SUMMARY**

Embodiments of this disclosure provide a video frame interpolation solution. This problem is solved by the subject matter of the independent claims. A first aspect of this disclosure provides a video frame interpolation method. The method includes: obtaining a first image at first time, a second image at second time, and sensor data captured by a dynamic vision sensor apparatus, where the sensor data includes dynamic event data between the first time and the second time; and determining at least one target image based on the first image, the second image, and the sensor data, where the at least one target image is an image corresponding to at least one target time between the first time and the second time.

According to embodiments of this disclosure, the dynamic event data is used to help compensate for motion information missing from existing image data. More nonlinear motion information can be obtained through optical flow estimation. This ensures that nonlinear motion information in a complex scenario can be interpolated, implements accurate prediction of an intermediate image, and obtains, through prediction, an image with better effect.

In an implementation of the first aspect, the at least one target image includes a first target image corresponding to first target time between the first time and the second time, and the determining at least one target image based on the first image, the second image, and the sensor data includes: determining, based on a first part of sensor data in the sensor data, a first optical flow from the first target time to the first time, where the first part of sensor data includes dynamic event data between the first time and the first target time; determining, based on a second part of sensor data in the sensor data, a second optical flow from the first target time to the second time, where the second part of sensor data includes dynamic event data between the first target time and the second time; and performing a frame interpolation operation on the first image and the second image based on the first optical flow and the second optical flow, to obtain the first target image corresponding to the first target time. In this manner, an optical flow between two time points can be estimated by using the dynamic event data, so that frame interpolation can be implemented by using an optical flow method.

In another implementation of the first aspect, the performing a frame interpolation operation on the first image and the second image based on the first optical flow and the second optical flow includes: converting the first image into a first intermediate image based on the first optical flow; converting the second image into a second intermediate image based on the second optical flow; and merging the first intermediate image and the second intermediate image to obtain the first target image. In this manner, a prediction image at an intermediate time point can be obtained through image conversion from a known start moment and a known end moment to the intermediate time point, and is used for merging into a target image.

In still another implementation of the first aspect, the merging the first intermediate image and the second intermediate image to obtain the first target image includes: adjusting the first optical flow based on the first image, the first part of sensor data, and the first intermediate image, to obtain a first adjusted optical flow; converting the first image into a third intermediate image based on the first adjusted optical flow; and merging the third intermediate image and the second intermediate image to obtain the first target image. An optical flow can be adjusted to obtain more accurate motion information for better image generation.

In yet another implementation of the first aspect, the merging the third intermediate image and the second intermediate image to obtain the first target image includes: adjusting the second optical flow based on the second image, the second part of sensor data, and the second intermediate image, to obtain a second adjusted optical flow; converting the second image into a fourth intermediate image based on the second adjusted optical flow; and merging the third intermediate image and the fourth intermediate image to obtain the first target image. Similarly, another optical flow used in frame interpolation can be adjusted to obtain more accurate motion information for better image generation.

In still yet another implementation of the first aspect, the merging the third intermediate image and the fourth intermediate image to obtain the first target image includes: determining a first fusion weight for the third intermediate image and a second fusion weight for the fourth intermediate image, where the first fusion weight indicates an importance degree of a corresponding pixel in the third intermediate image, and the second fusion weight indicates an importance degree of a corresponding pixel in the fourth intermediate image; and performing weighted merging on the third intermediate image and the fourth intermediate image based on the first fusion weight and the second fusion weight, to obtain the first target image. A fusion weight is determined, so that a more important pixel has greater impact on the target image, and there is a greater proportion and probability of being retained in the target image. This can also further improve accuracy of the target image.

In a further implementation of the first aspect, the determining a first fusion weight and a second fusion weight includes: determining the first fusion weight based on the first image, the first part of sensor data, the first optical flow, and the first intermediate image; and determining the second fusion weight based on the second image, the second part of sensor data, the second optical flow, and the second intermediate image. A fusion weight can also be determined based on an existing image, sensor data, and an optical flow, so that a weight of each pixel can be more accurately determined.

In a still further implementation of the first aspect, the method further includes: organizing the first image, the second image, and the at least one target image into a target video clip in a time sequence. In this way, low-frame-rate or even static images can be merged as a video clip with a high frame rate, which is appropriate for video generation requirements in various application scenarios.

In a yet further implementation of the first aspect, the first image and the second image respectively include a first video frame at the first time and a second video frame at the second time in a video clip. In a still yet further implementation of the first aspect, the first image and the second image each include a static image captured by a static imaging apparatus. With the help of dynamic event data, frame interpolation can be performed for both a dynamic video clip or a static image, so that a frame interpolation technology is more widely used.

In an even yet another implementation of the first aspect, the determining at least one target image based on the first image, the second image, and the sensor data includes: applying the first image, the second image, and the sensor data to a trained video frame interpolation model to obtain the at least one target image output by the video frame interpolation model. In such an implementation, automatic and accurate video frame interpolation can be implemented according to a machine learning algorithm and by learning and training a model.

A second aspect of this disclosure provides a video frame interpolation model training method. The method includes: obtaining a first sample image at first sample time, a second sample image at second sample time, and sample sensor data, where the sample sensor data includes dynamic event data between the first sample time and the second sample time; applying the first sample image, the second sample image, and the sample sensor data to a video frame interpolation model, to obtain a first prediction image corresponding to target sample time, where the target sample time is between the first sample time and the second sample time; generating, by using the video frame interpolation model and based on the first sample image, the second sample image, the first prediction image, and the sample sensor data, at least one of a second prediction image corresponding to the first sample time and a third prediction image corresponding to the second sample time; and updating a parameter value of the video frame interpolation model based on at least one of the following errors: a first error between the generated second prediction image and the first sample image, and a second error between the generated third prediction image and the second sample image.

According to an example embodiment of video frame interpolation disclosed in this disclosure, reciprocation motion information of two frames of images can be obtained based on event data, and three times of frame interpolation and two times of supervision are performed to complete a cyclic consistency training process. The training method is applicable only to a case in which two frames of data are used to complete two times of supervision and two times of frame interpolation, use a smaller frame data amount, and have more supervision times and better precision compared with a conventional method in which three frames of data are used to complete supervision and interpolation once.

In an implementation of the second aspect, the generating at least one of a second prediction image and a third prediction image includes at least one of the following: applying the second sample image, the first prediction image, and the sample sensor data to the video frame interpolation model to obtain the second prediction image; and applying the first sample image, the first prediction image, and the sample sensor data to the video frame interpolation model to obtain the third prediction image. Prediction is performed on images at different sample time, and prediction images can provide supervision information of the video frame interpolation model for model training.

In another implementation of the second aspect, the applying the second sample image, the first prediction image, and the sample sensor data to the video frame interpolation model to obtain the second prediction image includes: performing the following operations by using the video frame interpolation model: determining a first sample optical flow from the first sample time to the target sample time based on a first part of sample sensor data in the sample sensor data, where the first part of sample sensor data includes dynamic event data between the first sample time and the target sample time; determining a second sample optical flow from the first sample time to the second sample time based on the sample sensor data; and performing, based on the first sample optical flow and the second sample optical flow, a frame interpolation operation on the first prediction image and the second sample image, to obtain the second prediction image corresponding to the first sample time. Because sample dynamic event data can indicate reciprocation motion information between a start moment and an end moment, the sample dynamic event data can be used for an optical flow at any time point and in any direction within this time range.

In still another implementation of the second aspect, the applying the first sample image, the first prediction image, and the sample sensor data to the video frame interpolation model to obtain the third prediction image includes: performing the following operations by using the video frame interpolation model: determining a third sample optical flow from the second sample time to the target sample time based on a second part of sample sensor data in the sample sensor data, where the second part of sample sensor data includes dynamic event data between the target sample time and the second sample time; determining a fourth sample optical flow from the second sample time to the first sample time based on the sample sensor data; and performing, based on the third sample optical flow and the fourth sample optical flow, a frame interpolation operation on the first prediction image and the fourth sample image, to obtain the third prediction image corresponding to the second sample time. Because sample dynamic event data can indicate reciprocation motion information between a start moment and an end moment, the sample dynamic event data can be used for an optical flow at any time point and in any direction within this time range.

A third aspect of this disclosure provides a video frame interpolation apparatus. The apparatus includes: an obtaining unit, configured to obtain a first image at first time, a second image at second time, and sensor data captured by a dynamic vision sensor apparatus, where the sensor data includes dynamic event data between the first time and the second time; and a frame interpolation unit, configured to determine at least one target image based on the first image, the second image, and the sensor data, where the at least one target image is an image corresponding to at least one target time between the first time and the second time. In an actual application, the frame interpolation unit may be configured to implement the method according to any one of the first aspect or the possible implementations of the first aspect. The video frame interpolation apparatus may include functional modules configured to implement the method according to any one of the first aspect or the possible implementations of the first aspect.

A fourth aspect of this disclosure provides a video frame interpolation model training apparatus. The apparatus includes: a sample obtaining unit, configured to obtain a first sample image at first sample time, a second sample image at second sample time, and sample sensor data, where the sample sensor data includes dynamic event data between the first sample time and the second sample time; a first frame interpolation unit, configured to apply the first sample image, the second sample image, and the sample sensor data to a video frame interpolation model, to obtain a first prediction image corresponding to target sample time, where the target sample time is between the first sample time and the second sample time; a second frame interpolation unit, configured to generate, by using the video frame interpolation model and based on the first sample image, the second sample image, the first prediction image, and the sample sensor data, at least one of a second prediction image corresponding to the first sample time and a third prediction image corresponding to the second sample time; and a parameter update unit, configured to update a parameter value of the video frame interpolation model based on at least one of the following errors: a first error between the generated second prediction image and the first sample image, and a second error between the generated third prediction image and the second sample image. In an actual application, the video frame interpolation model training apparatus may include functional modules configured to implement the method according to any one of the second aspect or the possible implementations of the second aspect.

A fifth aspect of this disclosure provides an electronic device. The electronic device includes at least one computing unit and at least one memory, where the at least one memory is coupled to the at least one computing unit and stores instructions for execution by the at least one computing unit, and when the instructions are executed by the at least one computing unit, the device is enabled to perform the method according to any one of the first aspect or the possible implementations of the first aspect.

A sixth aspect of this disclosure provides an electronic device. The electronic device includes at least one computing unit and at least one memory, where the at least one memory is coupled to the at least one computing unit and stores instructions for execution by the at least one computing unit, and when the instructions are executed by the at least one computing unit, the device is enabled to perform the method according to any one of the second aspect or the possible implementations of the second aspect.

A seventh aspect of this disclosure provides a computer-readable storage medium. The computer-readable storage medium stores one or more computer instructions, and the one or more computer instructions are executed by a processor to implement the method according to any one of the first aspect or the possible implementations of the first aspect.

An eighth aspect of this disclosure provides a computer-readable storage medium. The computer-readable storage medium stores one or more computer instructions, and the one or more computer instructions are executed by a processor to implement the method according to any one of the second aspect or the possible implementations of the second aspect.

A ninth aspect of this disclosure provides a computer program product. The computer program product includes computer-executable instructions. When the computer-executable instructions are executed by a processor, a computer is enabled to perform instructions in some or all steps of the method according to any one of the first aspect or the possible implementations of the first aspect.

A tenth aspect of this disclosure provides a computer program product. The computer program product includes computer-executable instructions. When the computer-executable instructions are executed by a processor, a computer is enabled to perform instructions in some or all steps of the method according to any one of the second aspect or the possible implementations of the second aspect.

It may be understood that the video frame interpolation apparatus in the third aspect, the video frame interpolation model training apparatus in the fourth aspect, the electronic devices in the fifth aspect and the sixth aspect, the computer storage medium in the seventh aspect and the eighth aspect, or the computer program product in the ninth aspect and the tenth aspect are all used to implement the method provided in the first aspect. Therefore, the explanations or descriptions of the first aspect are also applicable to the second aspect, the third aspect, the fourth aspect, and the fifth aspect. In addition, for beneficial effect that can be achieved in the second aspect, the third aspect, the fourth aspect, and the fifth aspect, refer to the beneficial effect in the corresponding method. Details are not described herein again.

These aspects and other aspects of the present invention are simpler and easier to understand in descriptions of (a plurality of) embodiments below.

## BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, same or similar reference signs of the accompanying drawings represent the same or similar elements.

FIG. 1 is a schematic diagram of an example environment in which a plurality of embodiments of this disclosure can be implemented;

FIG. 2 is a schematic diagram of an example structure of a video frame interpolation apparatus according to some embodiments of this disclosure;

FIG. 3 is a schematic diagram of an example structure of a video frame interpolation model according to some embodiments of this disclosure;

FIG. 4 is a schematic diagram of information flows in a processing process of a video frame interpolation model according to some embodiments of this disclosure;

FIG. 5 is a schematic diagram of a video frame interpolation model training system according to some embodiments of this disclosure;

FIG. 6 is a schematic diagram of an example process of training a video frame interpolation model according to some embodiments of this disclosure;

FIG. 7 is a schematic diagram of a three-time frame interpolation process in training a video frame interpolation model according to some embodiments of this disclosure;

FIG. 8 is a flowchart of a video frame interpolation process according to some embodiments of this disclosure;

FIG. 9 is a flowchart of a video frame interpolation model training process according to some embodiments of this disclosure;

FIG. 10 is a block diagram of a video frame interpolation apparatus according to some embodiments of this disclosure;

FIG. 11 is a block diagram of a video frame interpolation model training apparatus according to some embodiments of this disclosure; and

FIG. 12 is a block diagram of an example device that can be used to implement an embodiment of this disclosure.

## DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may refer to different objects or a same object. Other explicit and implied definitions may be included below.

As used in this specification, the term "model" may learn corresponding input-to-output association from training data, and generate a corresponding output for a given input after completing training. The model may be generated based on a machine learning technology. Deep learning is a machine learning algorithm that uses multi-layer processing units to process inputs and provide corresponding outputs. A neural network model is an example of a deep learning-based model. In this specification, the "model" may also be referred to as a "machine learning model", a "learning model", a "machine learning network", or a "learning network", and these terms may be used interchangeably in this specification. A "neural network" is a machine learning network based on deep learning. The neural network is capable of processing an input and providing a corresponding output, and generally includes an input layer and an output layer, and one or more hidden layers between the input layer and the output layer.

Generally, machine learning may usually include three phases: a training phase, a testing phase, and a use phase (also referred to as an inference phase). In the training phase, a given model can be trained iteratively by using a large amount of training data until the model can obtain, from the training data, consistent inference that meets an expected objective. Through training, the model may be considered to be able to learn input-to-output association (also referred to as input-to-output mapping) from the training data. A parameter value of the trained model is determined. In the testing phase, a test input is applied to the trained model to test whether the model can provide a correct output, so as to determine performance of the model. In the use phase, the model may be used to process an actual input based on the parameter value obtained through training, and determine a corresponding output.

In this specification, a "frame" or a "video frame" refers to each image in a video clip. An "image" and a "frame" may be used interchangeably in this specification. A plurality of consecutive images may form a dynamic video clip, where each image is considered as a frame.

In a video frame interpolation task, in order to estimate a spatial location of each object in an intermediate frame, most video frame interpolation work assumes uniform motion between consecutive frames. Under this assumption, an object should move at a constant speed along a straight line between the consecutive frames. Although the method is simple, it may cause inaccurate motion estimation and, in many cases of real scenarios, incorrect intermediate frame prediction and artifacts. A recent research attempts to resolve a defect in the uniform motion assumption. Multi-frame estimation of velocity and acceleration is proposed, and a quadratic motion model is used to predict an intermediate frame better. However, in a case of large-scale complex motion, there is still a problem of inaccurate motion prediction. Currently, a better frame interpolation method is mainly based on a warping bidirectional optical flow. However, in most of these methods, it also simply assumes consecutive frames between uniform motion and a linear optical flow, which may not approximate complex nonlinear motion in the real world. Therefore, a nonlinear method is proposed to resolve a problem of complex nonlinear motion by learning high-order acceleration information between frames. However, an acceleration estimation error may cause a motion trail to deviate from a real value.

In some application scenarios, the video frame interpolation task is performed by training a video frame interpolation model by using a machine learning technology. However, there is a problem, that is, it is difficult to capture supervision data of video frame interpolation in a real scenario. In a given video with a low frame rate, there are no pairs of real frames for model supervision. For example, original frames at time t0 and time t1 are extracted from a video, and a video frame interpolation task is to predict one or more intermediate frames between the time t0 and the time t1. However, in a video with a low frame rate, the real intermediate frame cannot be obtained for training a video frame interpolation model.

Most of the existing video frame interpolation models are trained on a synthetic dataset. For example, in a video with a low frame rate, there will be no reference data for video frame interpolation in a supervised manner. Therefore, in some existing methods, frames usually need to be extracted from a video with a high frame rate recorded by a high-speed camera, and remaining frames and the extracted frames are respectively trained as model inputs and supervision information. However, these limitations greatly increase costs of obtaining the training data, limit a size of the dataset, and may result in a gap between a source training domain and a target domain. In addition, there is a domain difference between a synthesized intermediate frame and the real intermediate frame. Such a supervision method cannot fine-tune a target low-frame-rate image sequence. As a result, performance of the model may be degraded when the model is used in actual frame interpolation in an application phase.

Some other methods establish self-supervised frame interpolation based on cyclic consistency to supervise an original input frame. Such a method is based on cyclic consistency, where a plurality of intermediate frames are predicted and then used to reconstruct intermediate input frames. However, in order to achieve cyclic consistency, these methods need to perform a large time step of uniform motion between the consecutive frames, and therefore these methods also face a same problem as the method based on the uniform motion assumption. Cyclic consistency is widely used to establish constraints in a case without direct supervision, such as three-dimensional dense communication, disambiguating visual relations, or unpaired image-to-image translation. When the video frame interpolation task faces challenges, a self-supervised method based on cyclic consistency can learn behavior from any target low-frame-rate video sequence and synthesize high-frame-rate frame interpolation. However, in order to achieve cyclic consistency, in this method, a plurality of input frames are used and it is assumed that the consecutive frames move at a uniform speed at a large time step. This results in the artifacts caused by inaccurate motion prediction.

Embodiments of this disclosure provide an improved video frame interpolation solution. To resolve a problem of lack of intermediate information in a conventional frame-based camera, dynamic event data is introduced in this solution to perform prediction on an intermediate frame. The dynamic event data is captured by a dynamic sensor apparatus. Because the dynamic sensor apparatus can sense a change of intensity of a continuous optical flow, the dynamic sensor apparatus can store abundant inter-frame information. This is very useful for recovering the intermediate frame and helps alleviate difficulty of complex motion modeling in video frame interpolation. In some embodiments, the dynamic event data can further effectively help accurately predict a video frame interpolation model in a case of lack of self-supervised information in video frame interpolation.

Example embodiments of this disclosure are discussed in detail below with reference to the accompanying drawings.

Example implementation of an example environment and video frame interpolation

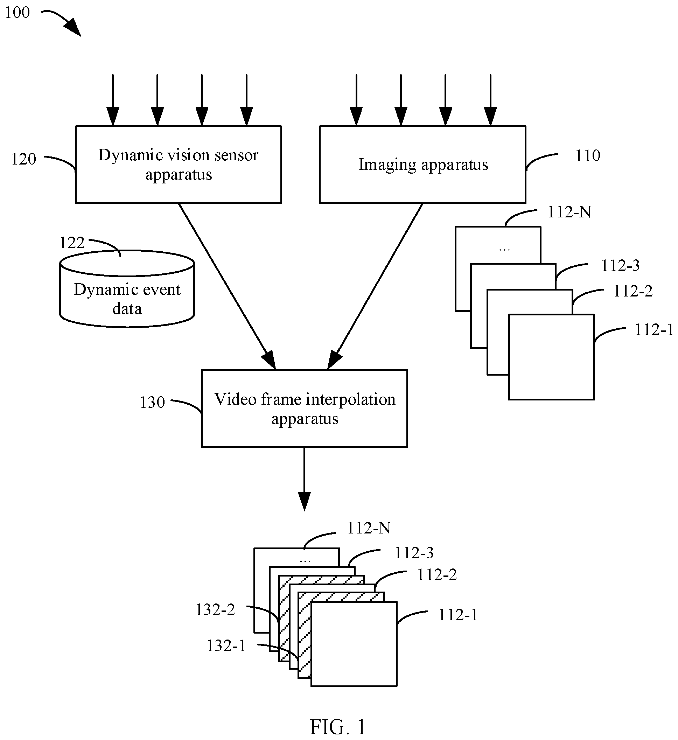

FIG. 1 is a schematic diagram of an example environment 100 in which a plurality of embodiments of this disclosure can be implemented. As shown in FIG. 1, the environment 100 includes an imaging apparatus 110, a dynamic vision sensor (DVS) apparatus 120, and a video frame interpolation apparatus 130.

The imaging apparatus 110 may include a dynamic imaging apparatus or a static imaging apparatus. The dynamic imaging apparatus may capture dynamic image data, for example, a video. The static imaging apparatus may capture static image data, for example, a discrete static image. In some embodiments, the imaging apparatus 110 may include one or more cameras, camera lens, and the like. The imaging apparatus 110 may capture one or more static images, a video or an animation of a specific length, or the like in a specific scenario. In the example of FIG. 1, the imaging apparatus 110 provides images 112-1, 112-2, 112-3, ..., and 112-N (collectively referred to as or individually referred to as images 112). In a video scenario, the images 112 may also be referred to as video frames (or "frames" for short) in a video.

The DVS apparatus 120 is configured to capture sensor data. The sensor data captured by the DVS apparatus 120 includes dynamic event data 122. The DVS apparatus 120 may include or be referred to as an event camera, a dynamic vision sensor (DVS), a silicon retina, an event-based camera, or a frameless camera. The DVS apparatus 120 is a biologically inspired, event-driven, and time-based neuromorphic visual sensor. The DVS apparatus 120 may sense the world by using a principle that is totally different from that of a conventional intensity camera, record occurrence of an event by asynchronously sensing a dynamic change of brightness of each pixel, and trigger an event when the change exceeds a specific threshold. Thus, the DVS apparatus 120 generates data about a change of light intensity (namely, dynamic event data) and performs transmission of the data, rather than a larger amount of data about absolute intensity at each optical sensor. An asynchronous event-driven processing manner enables the generated dynamic event data 122 to sense a change of the brightness at a high resolution (for example, a microsecond-level resolution), and further features low power consumption and a low bandwidth.

The video frame interpolation apparatus 130 is configured to perform a frame interpolation operation on the image 112. The video frame interpolation apparatus 130 may include or be implemented on any physical device or virtual device that has a computing capability, such as a server, a mainframe, a general-purpose computer, a virtual machine, a terminal device, or a cloud computing system. Embodiments of this disclosure are not limited in this respect.

When performing video frame interpolation, the video frame interpolation apparatus 130 obtains the two images 112 at different time, generates an intermediate image based on the two images 112, and then interpolates the intermediate image into between the two images 112. In this way, after frame interpolation, more images can be obtained, and a video clip with a higher frame rate is formed. For example, the video frame interpolation apparatus 130 may output the interpolated video clip, including the images 112-1, 132-1, 112-2, 132-2, 112-3, ..., and 112-N. In the video clip, the image 132-1 is predicted and interpolated between the images 112-1 and 112-2, and the image 132-2 is predicted and interpolated between the images 112-2 and 112-3. Although the example of FIG. 1 only shows prediction and interpolation of one image between two original images, in other examples, more images may be interpolated in the middle.

Since the DVS apparatus 120 can record a change of light intensity of a stream that can be considered as almost continuous and can store rich inter-frame information, in embodiments of this specification, the dynamic event data 122 captured by the DVS apparatus 120 is introduced to perform video frame interpolation. As to be discussed in detail below, the dynamic event data 122 may be used to implement more accurate motion information estimation. This makes a video frame interpolation result more accurate and authentic. In addition, the sensor data stored by the DVS apparatus 120 is sparse pulse data, and the sensor data is output only when a motion is detected. Therefore, a small amount of dynamic event data needs to be captured and stored.

In some scenarios, the dynamic event data 122 is used to assist in performing video frame interpolation on an image collected by an ordinary imaging device, so that a small amount of video/static image data with a low frame rate and sparse dynamic event data in this period of time can be captured and stored, and then video data with a high definition and a high frame rate is obtained through video frame interpolation. This implements effect of video storage and video quality optimization. The video data with the high definition and the high frame rate may also be applied to scenarios such as image information reconstruction, automatic driving, and augmented reality (AR)/virtual reality (VR)/mixed reality (MR) imaging

In some embodiments, the imaging apparatus 110 and the DVS apparatus 120 may be integrated into, for example, a terminal device, or may be centrally or separately installed at any data collection position, to capture image data and dynamic event data in a same scene. In some embodiments, the video frame interpolation apparatus 130 may be integrated into a same device as the imaging apparatus 110 and the DVS apparatus 120, or may be located at a remote device/system. For example, the video frame interpolation apparatus 130 may be included in a terminal device, or may be included in a remote server or a cloud computing system. Embodiments of this disclosure are not limited in this respect.

A video frame interpolation process based on dynamic event data is discussed in detail below with reference to some example embodiments.

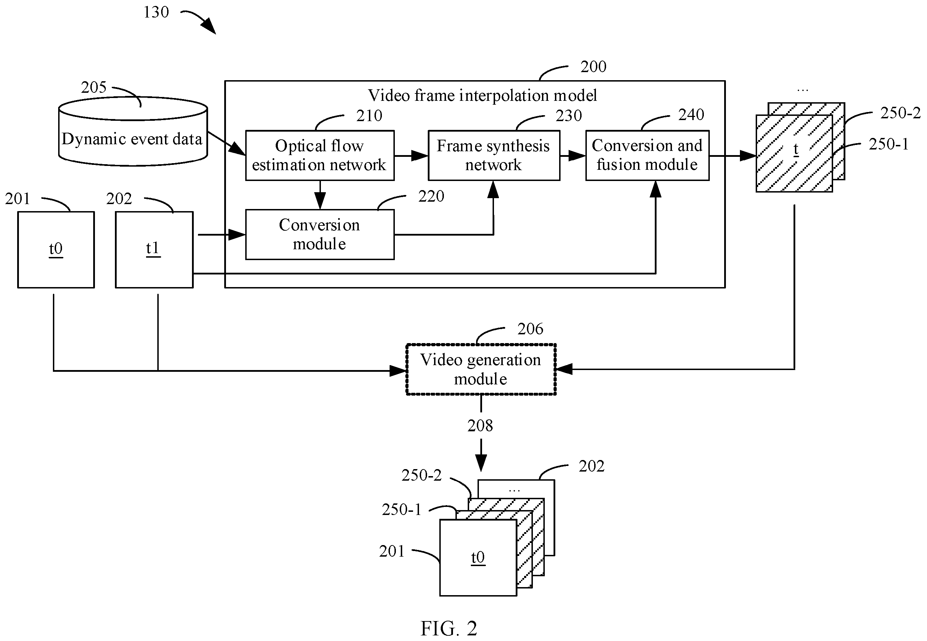

FIG. 2 is a schematic diagram of an example structure of the video frame interpolation apparatus 130 according to some embodiments of this disclosure. In the example embodiment in FIG. 2, a video frame interpolation model 200 is constructed and used to perform video frame interpolation processing. A training process of the video frame interpolation model 200 is to be referred to the accompanying drawings below. The trained video frame interpolation model 200 may be, for example, used by the video frame interpolation apparatus 130 in FIG. 1 to perform video frame interpolation processing.

As shown in FIG. 2, the video frame interpolation model 200 obtains an image 201 at time t0 and an image 202 at time t1, and further obtains sensor data captured by a DVS apparatus, where the sensor data includes dynamic event data 205 between the time t0 and the time t1. It is assumed that t1 is later than t0. For the pair of images for frame interpolation, t0 may be sometimes referred to as a start moment of frame interpolation, and t1 may be referred to as an end moment.

In the example embodiment in FIG. 2, the images 201 and 202 may be images at two different time points selected from the series of images 112 captured by the imaging apparatus 110. The images 201 and 202 may be adjacent images, or images at any interval. In some embodiments, the images 201 and 202 may include video frames at two different time in a video clip. In some embodiments, the images 201 and 202 may also include static images captured at different time.

In the example embodiment in FIG. 2, the dynamic event data 205 may be a part or all of the sensor data captured by the DVS apparatus 120. The dynamic event data 205 covers at least a time range from t0 to t1. As mentioned above, the dynamic event data 205 indicates a change of light intensity in a specific scene captured within the time range from t0 to t1, and the scene corresponds to a scene in which the images 201 and 202 are captured.

In embodiments of this disclosure, the video frame interpolation model 200 determines, based on the image 201, the image 202, and the dynamic event data 205, target images 250-1 and 250-2, and the like (collectively referred to as or individually referred to as target images 250) corresponding to one or more target time between t0 and t1. A quantity of target images to be predicted depends on specific requirements. For example, in order to obtain a video with a higher frame rate, more images may need to be interpolated between t0 and t1. It may be understood that, although a plurality of target images 250 are shown, in some examples, the video frame interpolation model 200 may determine only one target image 250, or determine more target images 250 than those shown. When the plurality of target images 250 are generated, the different target images 250 correspond to different time between t0 and t1, with any interval between these time (the interval may depend, for example, on a required frame rate).

In some embodiments, as shown in FIG. 2, the video frame interpolation apparatus 130 may further include a video generation module 206, configured to organize the images 201 and 202 and the generated one or more target images 250 into a target video clip 208 in a time sequence. In this way, if the images 201 and 202 come from a source video clip, a video clip with a higher frame rate can be obtained by interpolating the target video images 250. If the images 201 and 202 each are a static image captured by a static imaging apparatus, a dynamic video clip can be obtained by interpolating the target video images 250.

When the target images 250 are generated, because the dynamic event data 205 is driven by an event (for example, a motion event) and indicates the change of the light intensity, the dynamic event data 205 may be used to estimate motion information of an object between any two time points in the time range from t0 to t1. In some embodiments, video frame interpolation may be implemented based on an optical flow method. An optical flow refers to instantaneous velocity of a pixel motion of a moving object in a (optical flow) space on an observation imaging plane. Therefore, in the optical flow method, a correspondence between a previous frame and a current frame is found by using a change of a pixel in an image sequence in time domain and correlation between adjacent frames, so as to calculate motion information of an object between the adjacent frames.

In some embodiments, the dynamic event data 205 may be used to estimate an optical flow between two images, and prediction of an image at an intermediate time point may be implemented based on the optical flow. In some embodiments, optical flow estimation may be implemented according to a machine learning algorithm. Optical flow estimation based on the machine learning algorithm is as follows: An optical flow estimation network is first trained, an optical flow between images at two time points is determined by using the trained optical flow estimation network, and a known image at one time point is converted based on the determined optical flow, to obtain an intermediate image corresponding to the other time point. A target image to be interpolated is determined based on the obtained intermediate image.

It is assumed that the video frame interpolation model 200 determines the target image 250 corresponding to the time t between t0 and t1. t may be any interval between t0 or t1, for example, an interval of $\tau$. If the plurality of target images 250 are to be determined, the time t of different target images 250 may have different intervals from t0 or t1. During optical flow estimation, an optical flow (represented as $F_{t \to t0}$) from t to t0 is determined based on a first part of sensor data (represented as $E_{t \to t0}$) in the dynamic event data 205 between t0 and t1, namely, the dynamic event data between t0 and t; and an optical flow (represented as $F_{t \to t1}$) from t to t1 is determined based on a second part of sensor data (represented as $E_{t \to t1}$) in the dynamic event data 205, namely, the dynamic event data between t and t1. The two optical flows $F_{t \to t0}$ and $F_{t \to t1}$ are respectively used to convert the image 201 at the time t0 and the image 202 at the time t1, so as to convert the image 201 to an intermediate image at the time t, and convert the image 202 to an intermediate image at the time t.

In a conventional solution, because there is no dynamic time data, an optical flow between t0 and t1 needs to be directly calculated, and an optical flow between t and t0 and an optical flow between t and t1 are determined in proportion based on an assumption of linear motion. However, in embodiments of this disclosure, the dynamic event data has the high resolution and rich motion information between the two time points (t0 and t1), and therefore can be used to accurately predict motion information of a moving object between any two time points in the range from t0 to t1, including a complex nonlinear motion. Therefore, in embodiments of this disclosure, the optical flow from t to t0 and the optical flow from t to t1 can be estimated based on two times of optical flow estimation, and the image at the time point t0 and the image at the time point t1 are converted to implement image prediction at the intermediate time point t.

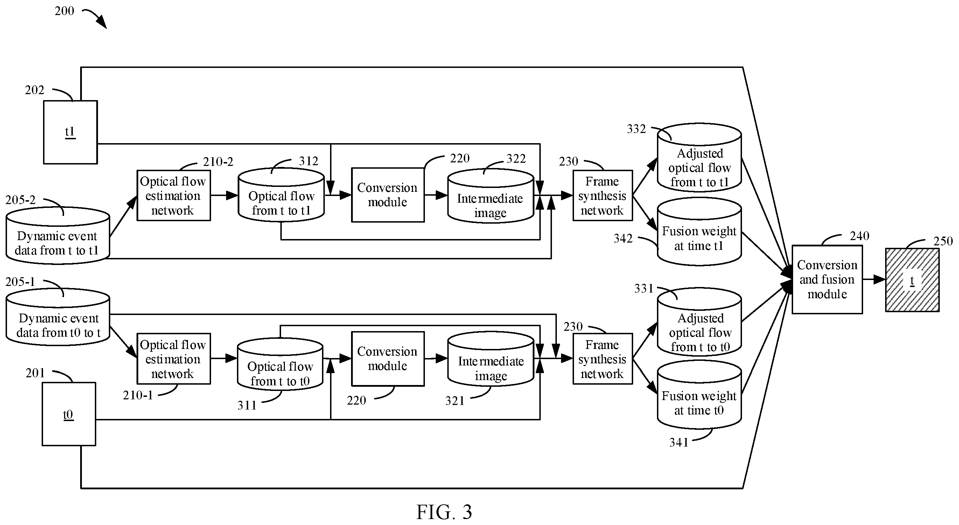

FIG. 2 also specifically shows an example structure of the video frame interpolation model 200 in an optical flow-based implementation. As shown in FIG. 2, the video frame interpolation model 200 includes an optical flow estimation network 210, a conversion module 220, a frame synthesis network 230, and optionally, a conversion and fusion module 240. In the video frame interpolation model 200, the optical flow estimation network 210 is configured to implement optical flow estimation. Other modules/networks implement image prediction at an intermediate time point based on a determined optical flow. Specific functions of these components in the video frame interpolation model 200 are to be described in more detail below with reference to FIG. 3. FIG. 3 shows only a process of determining one target image 250. If the plurality of target images 250 between t0 and t1 need to be determined, a process may be implemented in a similar manner.

In FIG. 3, a lower branch is configured to implement optical flow estimation from t to t0 and perform subsequent processing on an estimated optical flow and the basis of the estimated optical flow, and an upper branch is configured to implement optical flow estimation from t to t1 and perform subsequent processing on an estimated optical flow and the basis of the estimated optical flow.

As shown in FIG. 3, the optical flow estimation network 210 may be divided into an optical flow estimation network 210-1 and an optical flow estimation network 210-2. The optical flow estimation network 210-1 may be configured to determine an optical flow 311 (represented as $F_{t \to t0}$) from t to t0 based on dynamic event data 205-1 between t0 and t. The optical flow estimation network 210-2 may be configured to determine an optical flow 312 (represented as $F_{t \to t1}$) from the time t to t1 based on the second part of the sensor data (represented as $E_{t \to t0}$) in the dynamic event data 205, namely, dynamic event data 205-2 between t and t1. In some embodiments, the optical flow estimation network 210-1 and the optical flow estimation network 210-2 may be configured as a machine learning model or a neural network, for example, a FlowNet network based on dynamic event data. The optical flow estimation network 210-1 and the optical flow estimation network 210-2 each may learn, through a training process, estimation of the optical flow from the dynamic event data. The training process of each of the optical flow estimation network 210-1 and the optical flow estimation network 210-2 is completed with that of the video frame interpolation model 200, and training of the model is to be discussed in detail below.

The two optical flows 311 and 312 ($F_{t \to t0}$ and $F_{t \to t1}$) are respectively used to convert the image 201 at the time t0 and the image 202 at the time t1. Specifically, the conversion module 220 may be configured to: convert the image 201 to the intermediate image 321 at the time t based on the optical flow 311 $F_{t \to t0}$, and convert the image 202 to the intermediate image 322 at the time t based on the optical flow 312 $F_{t \to t1}$. As mentioned above, the optical flow indicates the instantaneous velocity of the pixel motion on the imaging plane. Therefore, if optical flows at two time points and an image at one time point are known, it may be determined that pixels in the image at the time point correspond to which pixels in an image at the other time point. Accordingly, the known image (like the image 201 or 202) may be converted to a corresponding image (like the image 321 or 322). In the optical flow-based image conversion process, it may also be based on an assumption that "brightness does not change", that is, when a same target moves between different frames, brightness of the target does not change. An operation of converting the image 201 or 202 based on the optical flow is sometimes referred to as an optical flow-based mapping operation or warp operation.

It is assumed that the image 201 is represented as $I_{t0}$, and the image 202 is represented as $I_{t1}$. The intermediate image 321 obtained after the image 201 is converted based on the optical flow 311 $F_{t \to t0}$ may be represented as $g(It_0, F_{t \to t0})$, and the intermediate image 322 obtained after the image 202 is converted based on the optical flow 312 $F_{t \to t1}$ may be represented as $g(It_1, F_{t \to t1})$, where g represents a conversion operation.

The intermediate images 321 and 322 correspond to images, at the target time t, converted from the image 201 and the image 202. In some embodiments, a target image 250 at the target time t may be determined by merging the intermediate images 321 and 322. In some embodiments, the intermediate images 321 and 322 may generate a target image 250 through weighted merging. Weights of the intermediate images 321 and 322 may be predetermined, or may be equal by default.

In some embodiments, the frame synthesis network 230 may adjust the optical flows 311 and 312 and/or be configured to further accurately determine the weights for merging the intermediate images, and then may perform image merging based on adjusted optical flows and/or the weights given.

Specifically, in some embodiments, the frame synthesis network 230 may be configured to adjust the optical flow 311 $F_{t \to t0}$ based on the image 201, the part of sensor data (such as the dynamic event data 205-1) between t0 and t, and the intermediate image 321, to determine an adjusted optical flow 331 from t to t0. The frame synthesis network 230 may also be configured to adjust the optical flow 312 $F_{t \to t1}$ based on the image 202, the part of sensor data (such as the dynamic event data 205-2) between t and t1, and the intermediate image 322, to determine an adjusted optical flow 332 from t to t1. The optical flow is adjusted to make an optical flow for image prediction more accurate. Based on the original image 201 (and the image 202) and the converted intermediate image 321 (and the intermediate image 322), the frame synthesis network 230 may use the dynamic event data again to determine whether motion information between two time points needs to be adjusted. This obtains a more accurate optical flow estimation result.

In some embodiments, the frame synthesis network 230 may determine an optical flow adjustment amount (represented as $\Delta F_{t \to t0}$) for the optical flow 311 $F_{t \to t0}$ and an optical flow adjustment amount (represented as $\Delta F_{t \to t1}$) for the optical flow 312 $F_{t \to t1}$. The frame synthesis network 230 may perform a frame synthesis operation on a network input to obtain an optical flow adjustment amount. The frame synthesis network 230 may determine adjustment management based on the optical flow adjustment amount. For example, the adjusted optical flow for the optical flow 311 $F_{t \to t0}$ may be determined as $F_{t \to t0} + \Delta F_{t \to t0}$, and the adjusted optical flow for the optical flow 312 $F_{t \to t1}$ may be determined as $F_{t \to t1} + F_{t \to t1}$.

In some embodiments, in addition to adjusting the optical flow or as an alternative, the frame synthesis network 230 may be configured to determine a fusion weight 341 (represented as $V_{t0}$) for the image 201 based on the image 201, the dynamic event data 205-1, the intermediate image 321, and the optical flow 311 $F_{t \to t0}$. The frame synthesis network 230 may alternatively be configured to determine a fusion weight 342 (represented as $Vt_1$) for the image 202 based on the image 202, the dynamic event data 205-2, the intermediate image 322, and the optical flow 312 $F_{t \to t1}$. The fusion weights are used to subsequently perform weighted merging on the intermediate images obtained based on the adjusted optical flows. In some examples, the fusion weight may be represented in a form of a matrix, and each element in the matrix indicates a weight of a corresponding pixel.

In some embodiments, the frame synthesis network 230 may be configured as a machine learning model or a neural network, and learns, through a training process, determining a current optical flow adjustment amount based on an input original image, dynamic event data, an optical flow, and an intermediate image. The training process of the frame synthesis network 230 is completed together with that of the video frame interpolation model 200, and training of the model is to be discussed in detail below.

In some embodiments in which the frame synthesis network 230 performs optical flow adjustment, the conversion and fusion module 240 may be configured to perform a conversion operation again based on the adjusted optical flow. The conversion and fusion module 240 may convert the image 201 into another intermediate image (represented as $g(It_0, F_{t \to t0} + \Delta F_{t \to t0})$) based on the adjusted optical flow 331 from t to t0, and convert the image 202 into another intermediate image (represented as $g(It_1, F_{t \to t1} + \Delta F_{t \to t1})$) based on the adjusted optical flow 332 from t to t1. The intermediate images herein correspond to images, at the target time t, converted from the image 201 and the image 202 based on the adjusted optical flows. In some embodiments, the conversion and fusion module 240 may merge the two intermediate images to determine the target image 250 (represented as $\hat{I_t}$) at the target time t.

In some embodiments in which the frame synthesis network 230 determines the fusion weights, the conversion and fusion module 240 may be configured to perform weighted merging on the intermediate images $g(It_0, F_{t \to t0} + \Delta F_{t \to t0})$ and $g(I_{t1}, F_{t \to t1} + \Delta F_{t \to t1})$ based on the fusion weights, to obtain the target image 250. Herein, the fusion weight $V_{t0}$ may indicate an importance degree of a corresponding pixel in the intermediate image $g(It_0, F_{t \to t0} + \Delta F_{t \to t0})$, and the fusion weight $V_{t1}$ may indicate an importance degree of a corresponding pixel in the intermediate image $g(It_1, F_{t \to t1} + \Delta F_{t \to t1})$. A greater fusion weight of each pixel means that the pixel is more likely to be seen in the target image 250. Therefore, the fusion weights $V_{t0}$ and $Vt_1$ sometimes may also become a visual weight or a visual matrix.

In some embodiments, weighting of the intermediate image based on the fusion weight may be represented as

follows: $\widehat{I_t} = \frac{1}{z} \odot ((t1 - t)V_{t0} \odot g(I_{t0}, F_{\to t0} + \Delta F_{t\to t0}) + (t - t0)V_{t1} \odot g(I_{t1}, F_{t\to t1} + \Delta F_{t\to t1}))$ ,

where z represents that a normalized item is equal to (t1-t) $V_{t0}$+(t-t0) $V_{t1}$, and $\odot$ represents matrix point multiplication.

In some embodiments, the fusion weights for the intermediate images that are finally to be merged may also be determined in another manner, for example, may be equal by default, may be another predetermined value, or may be configured in another manner. Embodiments of this disclosure are not limited in this respect.

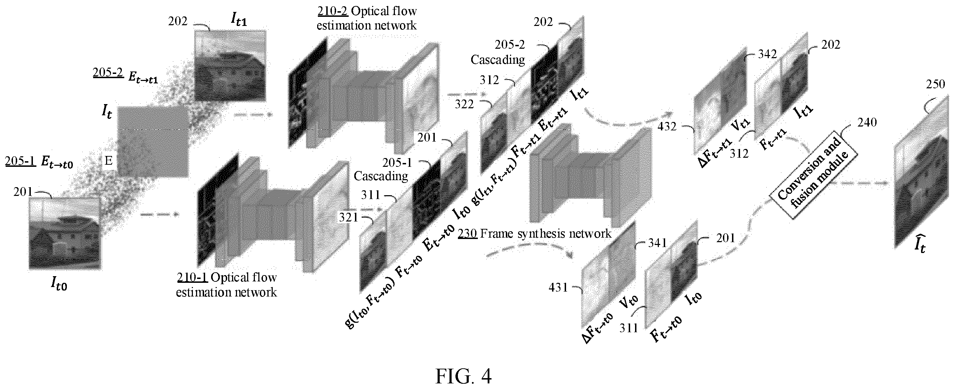

FIG. 4 is a schematic diagram of information flows in the processing process of the video frame interpolation model 200 according to some embodiments of this disclosure. It is noted that an example image is given in FIG. 4, but it is understood that this is only an example.

As shown in FIG. 4, an input of the entire processing process includes the image 201 at the time t0, the image 202 at the time t1, and the sensor data between the time t0 and the time t1, where the sensor data includes the dynamic event data 205-1 between t and t0 and the dynamic event data 205-2 between t and t1. The optical estimation network 210-1 estimates the optical flow *311* $F_{t\to t0}$ from t to t0, and the optical estimation network 210-2 estimates the optical flow 312 $F_{t\to}$ $_{t0}$ from t to t1. The conversion module 220 converts the image 201 $I_{t0}$ into the intermediate image 321 g($I_{t0}$, $F_{t\to t0}$) based on the optical flow 311 $F_{t\to t0}$, and the conversion module 220 converts the image 202 $I_{t1}$ into the intermediate image 322 g($I_{t1}$, $F_{t\to t1}$) based on the optical flow 312 $F_{t\to t1}$.

The intermediate image 321 g($I_{t0}$, $F_{t\to t0}$), the optical flow 311 $F_{t\to t0}$, the dynamic event data 205-1 $E_{t\to t0}$), and the image 201 $I_{t0}$ are concatenated as an input of the frame synthesis network 230 for determining the optical flow adjustment amount 431 $\Delta F_{t\to t0}$ and/or the fusion weight 341 $V_{t0}$. The intermediate image 322 g($I_{t1}$, $F_{t\to t1}$), the dynamic event data 205-2 $E_{t\to t1}$, and the image 202 $I_{t1}$ are concatenated as an input of the frame synthesis network 230 for determining the optical flow adjustment amount 432 $\Delta F_{t\to t1}$ and/or the fusion weight 342 $Vt_1$. The optical flow adjustment amount 431 $\Delta F_{t\to t0}$ is added to the optical flow 311 $F_{t\to t0}$, to obtain the adjusted optical flow from t to t0. The optical flow adjustment amount 432 $\Delta F_{t\to t1}$ is added to the optical flow 312 $F_{t\to t1}$, to obtain the adjusted optical flow from t to t1.

The conversion and fusion module 240 may perform a conversion operation on the image 201 $I_{t0}$ again based on the optical flow adjustment amount 431 $\Delta F_{t\to t0}$ and the adjusted optical flow determined based on the optical flow 311 $F_{t\to t0}$, and perform a conversion operation on the image 202 $I_{t1}$ again based on the optical flow adjustment amount 432 $\Delta F_{t\to t1}$ and the adjusted optical flow determined based on the optical flow 312 $F_{t\to t1}$. The conversion and fusion module 240 may further perform, by using the fusion weight 341 $V_{t0}$ and the fusion weight 342 $V_{t1}$, weighted fusion on the intermediate images g($I_{t0}$, $F_{t\to t0} + \Delta F_{t\to t0}$) and g($I_{t1}$, $F_{t\to t1} + \Delta F_{t\to t1}$) that are obtained through conversion again, to obtain the target image 250 $\widehat{I_t}$ .

According to the example embodiment of video frame interpolation according to this disclosure, the dynamic event data is used to help compensate for motion information missing from existing image data. The optical flow estimation network can obtain more nonlinear motion information. This ensures that nonlinear motion information in a complex scenario can be interpolated, and implements accurate prediction of the intermediate image.

Training of the video frame interpolation model

As mentioned above, the video frame interpolation model 200 needs to be trained to determine appropriate parameter values in the model, especially for the optical flow estimation networks 210-1 and 210-2 and the frame synthesis network 230 in the model whose parameter values for processing need to be determined based on model parameters. In a conventional video frame interpolation method, to train a model, frames need to be extracted from a video with a high frame rate, and remaining frames and the extracted frames are respectively used as model inputs and supervision information of model outputs. However, this greatly increases costs of obtaining training data, limits a size of a dataset, and may result in a gap between a source training domain and a target domain. Therefore, a self-supervised method is required. In embodiments of this disclosure, a self-supervised model can be trained based on the dynamic event data instead of direct supervision information about an intermediate frame.

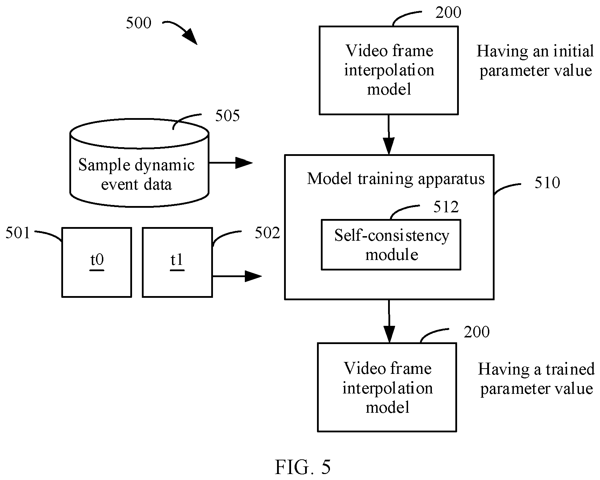

FIG. 5 is a schematic diagram of a video frame interpolation model training environment 500 according to some embodiments of this disclosure. In the environment 500, a model training apparatus 510 is configured to train the video frame interpolation model 200 having an initial parameter value. At this stage, a structure of the video frame interpolation model 200 may be determined, but the parameter value specifically for processing is not optimized.

The model training apparatus 510 is configured to obtain a sample image 501, a sample image 502, and sample sensor data captured by a dynamic sensor apparatus, where the sample sensor data includes sample dynamic event data 505. The sample image 501 and the sample image 502 may be images at two time points. Similar to the images 201 and 202, the sample image 501 and the sample image 502 may be images, at two different time points, selected from a series of images captured by an imaging apparatus.

The sample image 501 and the sample image 502 may be adjacent images or images at any interval. In some embodiments, the sample image 501 and the sample image 502 may include video frames at two different time in a video clip. In some embodiments, the sample image 501 and the sample image 502 each may also include a static image captured at different time. For ease of subsequent discussion, it is assumed that sample time of the sample image 501 is represented as t0, and sample time of the sample image 502 is represented as t1. However, it should be understood that the sample images 501 and 502 may be different from the images 201 and 202. Therefore, although t0 and t1 are also used to represent corresponding time, the time may be different.

The sample dynamic event data 505 covers at least a time range from t0 to t1. As mentioned above, the dynamic event data 505 indicates a change of light intensity captured in a specific scene within the time range from t0 to t1, and the scene corresponds to a scene in which the sample images 501 and 502 are captured.

The model training apparatus 510 is configured to train the video frame interpolation model 200 based on the sample images 501 and 502, and the sample dynamic event data 505, to optimize the parameter of the video frame interpolation model 200. In the model training embodiment of this disclosure, it is assumed that an image sequence includes reciprocal motions in the scene corresponding to two input images, that is, an object in the scene repeatedly moves forward and backward. Based on this, when there is no real target image corresponding to target time t for frame interpolation, the model training apparatus 510 may perform two or three times of interpolation processing based om the sample dynamic event data 505 and the sample images 501 and 502 based on a case that the sample dynamic event data 505 can indicate reciprocating motion information between the images, and the video frame interpolation model 200 separately determines a prediction image corresponding to the target sample time t, a prediction image corresponding to the start moment t0, and/or a prediction image corresponding to the end moment t1. Then, the model training apparatus 510 performs supervised training based on the prediction image corresponding to the start moment t0 and the sample image 501 corresponding to the real start moment t, and/or the prediction image corresponding to the end moment t1 and the sample image 502 corresponding to the real end moment t1, to form an unsupervised training solution.

The model training apparatus 510 includes a self-consistency module 512, configured to update the parameter value of the video frame interpolation model 200 based on errors/an error between a prediction image obtained through frame interpolation and the sample images 501 and/or 502. In order to be able to update or optimize the parameter value to a desired state, a plurality of iterative update operations may be required, and a current parameter value of the video frame interpolation model 200 is updated in each iteration. Although not specifically shown in FIG. 5, a plurality of pairs of sample images and associated sample dynamic event data are required in an iterative update process. This is a well-known operation in model training, and details are not described herein.

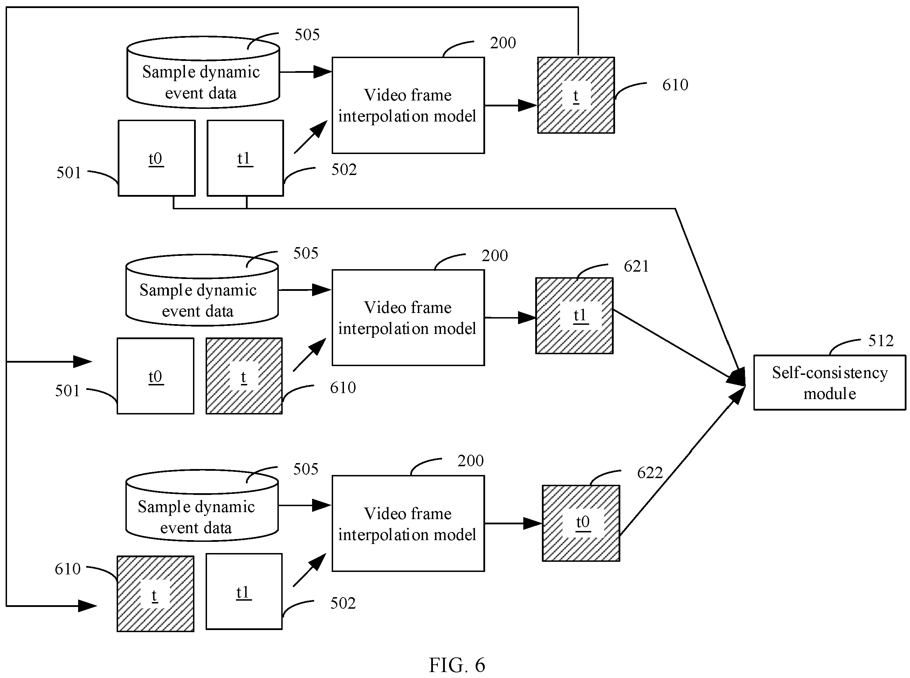

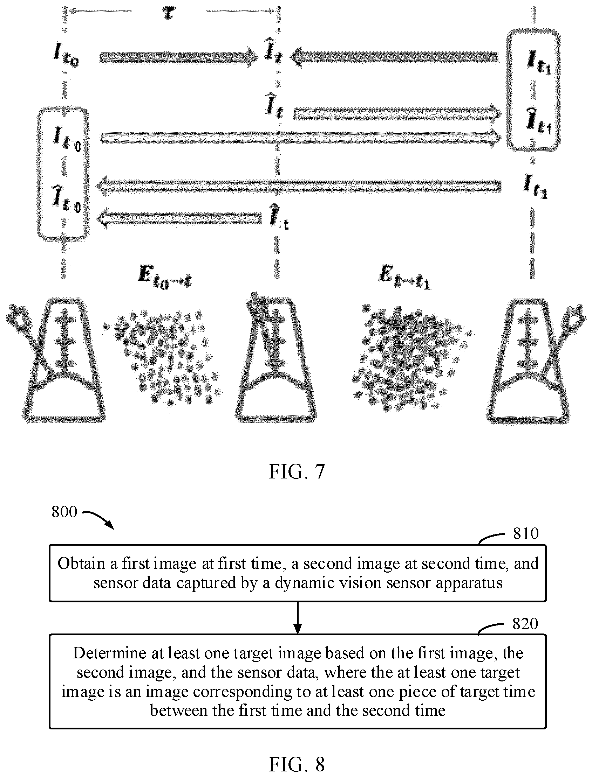

To better understand a self-supervised model training manner that is implemented based on the dynamic event data and that is provided embodiments of this disclosure, FIG. 6 is a schematic diagram of an example process of training the video frame interpolation model 200 according to some embodiments of this disclosure, and FIG. 7 is a schematic diagram of a three-time frame interpolation process in training the video frame interpolation model according to some embodiments of this disclosure.

As shown in FIG. 6, in each iteration, the sample image 501 at t0, the sample image 502 at t1, and the sample dynamic event data 505 are first input into the video frame interpolation model 200. Based on the inputs, the video frame interpolation model 200 may generate a prediction image 610 (represented as 4) corresponding to the target sample time t. There is an interval of $\tau$ between the target sample time t and t0. For internal processing of the input by the video frame interpolation model 200, refer to the foregoing described embodiments. In a training phase, a parameter value used by the video frame interpolation model 200 for processing in each iteration may be a parameter value updated in a previous iteration, and the initial parameter value may be used for initial processing. As shown in FIG. 7, the prediction image 610 $\widehat{I_t}$ corresponding to the intermediate sample target time t may be determined based on the sample image 501 $I_{t0}$ and the sample image 502 $I_{t1}$.

The obtained prediction image 610 corresponding to the target sample time t, the sample image 501 at t0, and the sample dynamic event data 505 are input into the video frame interpolation model 200, to generate a prediction image 621 (represented as $\widehat{I_{t1}}$) corresponding to t1. In this frame interpolation processing, the image corresponding to the end moment t1 needs to be predicted, and the images corresponding to time t0 and t before t1 are input. Thus, during processing of the video frame interpolation model 200, the optical flow estimation networks 210-1 and 210-2 respectively determine the optical flow from t1 to t based on the sample dynamic event data $E_{t1 \to t1}$ between t and t1, and determine the optical flow from t1 to t0 based on the complete sample dynamic event data 505 $E_{t1 \to t0}$ between t0 and t1. Because the sample dynamic event data 505 can indicate the reciprocation motion information between t0 and t1, the sample dynamic event data 505 may be used to determine an optical flow at any time point and in any direction between t0 and t1.

After determining the optical flows, the video frame interpolation model 200 may perform a frame interpolation operation based on the optical flow from t1 to t, the optical flow from t1 to t0, the sample image 501, and the prediction image 610, to determine the prediction image 621 at t1. The components in the video frame interpolation model 200 may perform the functions described above. Specifically, the conversion module 220 in the video frame interpolation model 200 may convert the prediction image 610 $\widehat{I_t}$ into an intermediate image based on the optical flow from t1 to t, and convert the sample image 501 $I_{t0}$ into an intermediate image based on the optical flow from t1 to t0. The frame synthesis network 230 and the conversion and fusion module 240 in the video frame interpolation model 200 continue to perform optical flow adjustment and fusion weight determining based on the converted intermediate images, to obtain the determined prediction image 621 $I_{t1}$ at t1. As shown in FIG. 7, the prediction image 621 $\widehat{I_{t1}}$ corresponding to the intermediate sample target time t may be determined based on the sample image 501 $I_{t0}$ and the prediction image 610 $\widehat{I_t}$.

The obtained prediction image 610 corresponding to the target sample time t, the sample image 502 at t1, and the sample dynamic event data 505 may be input to the video frame interpolation model 200 again, to generate a prediction image 622 (represented as $\widehat{I_{t0}}$) corresponding to t0. In this frame interpolation processing, the image corresponding to the start moment t0 needs to be predicted, and the images corresponding to time t and time t1 after t0 are input. Thus, during processing of the video frame interpolation model 200, the optical flow estimation networks 210-1 and 210-2 respectively determine the optical flow from t0 to t based on the sample dynamic event data $E_{t0 \to t}$ between t0 and t, and determine the optical flow from t0 to t1 based on the complete sample dynamic event data 505 $E_{t0 \to t1}$ between t0 and t1. Because the sample dynamic event data 505 can indicate the reciprocation motion information between t0 and t1, the sample dynamic event data 505 may be used to determine an optical flow at any time point and in any direction between t0 and t1.

After determining the optical flows, the video frame interpolation model 200 may perform a frame interpolation operation based on the optical flow from t0 to t, the optical flow from t0 to t1, the sample image 502, and the prediction image 610, to determine the prediction image 622 at t0. The components in the video frame interpolation model 200 may perform the functions described above. Specifically, the conversion module 220 in the video frame interpolation model 200 may convert the prediction image 610 $\widehat{I_t}$ into an intermediate image based on the optical flow from t0 to t, and convert the sample image 502 $I_{t1}$ into an intermediate image based on the optical flow from t0 to t1. The frame synthesis network 230 and the conversion and fusion module 240 in the video frame interpolation model 200 continue to perform optical flow adjustment and fusion weight determining based on the converted intermediate images, to obtain the determined prediction image 622 $\widehat{I_{t0}}$ at t0. As shown in FIG. 7, the prediction image 622 $\widehat{I_{t0}}$ corresponding to the intermediate sample target time t may be determined based on the sample image 502 $I_{t1}$ and the prediction image 610 $\widehat{I_t}$.

The sample image 501 $I_{t0}$, the sample image 502 $I_{t1}$, the prediction image 622 $\widehat{I_{t0}}$, and the prediction image 621 $\widehat{I_{t1}}$ are provided to the self-consistency module 512 configured to: determine an error between the sample image 501 $I_{t0}$ and the prediction image 622 $\widehat{I_{t0}}$ and an error between the sample image 502 $I_{t1}$ and the prediction image 622 $\widehat{I_{t1}}$, and update the parameter value of the video frame interpolation model 200 based on the determined error. In some embodiments, the self-consistency module 512 may construct a loss function $||\widehat{I_{t0}} - I_{t0}||_1 + ||\widehat{I_{t1}} - I_{t1}||_1$ based on the error, where $|\;\|\|_1$ represents an L1 norm. When updating the parameter value, the self-consistency module 512 may update, based on the loss function, the parameter value to minimize or reduce a value of the loss function to achieve a convergence objective.

During parameter value update and model training, various model training algorithms, such as a random gradient descent method, may be used. Embodiments of this disclosure are not limited in this respect. It should be understood that although FIG. 6 and FIG. 7 show two prediction errors, only one error may be constructed in some embodiments.

According to the example embodiment of video frame interpolation disclosed in this disclosure, reciprocation motion information of two frames of images can be obtained based on event data, and three times of frame interpolation and two times of supervision are performed to complete a cyclic consistency training process. The training method is applicable only to a case in which two frames of data are used to complete two times of supervision and two times of frame interpolation, use a smaller frame data amount, and have more supervision times and better precision compared with a conventional method in which three frames of data are used to complete supervision and interpolation once. In addition, the training process lacks real benchmark data for supervision, and in this case, the original frame data is used for self-supervision. This can better resolve an actual scenario problem and improve predicament of lack of the real benchmark data.

Example process

FIG. 8 is a flowchart of a video frame interpolation process 800 according to some embodiments of this disclosure. The process 800 may be implemented, for example, at the video frame interpolation apparatus 130 in FIG. 1. For ease of description, the following describes the process 800 with reference to FIG. 1.

At a block 810, the video frame interpolation apparatus 130 obtains a first image at first time, a second image at second time, and sensor data captured by a dynamic vision sensor apparatus, where the sensor data includes dynamic event data between the first time and the second time. At a block 820, the video frame interpolation apparatus 130 determines at least one target image based on the first image, the second image, and the sensor data, where the at least one target image is an image corresponding to at least one target time between the first time and the second time.

In some embodiments, the at least one target image includes a first target image corresponding to first target time between the first time and the second time, and the determining at least one target image based on the first image, the second image, and the sensor data includes: determining, based on a first part of sensor data in the sensor data, a first optical flow from the first target time to the first time, where the first part of sensor data includes dynamic event data between the first time and the first target time; determining, based on a second part of sensor data in the sensor data, a second optical flow from the first target time to the second time, where the second part of sensor data includes dynamic event data between the first target time and the second time; and performing a frame interpolation operation on the first image and the second image based on the first optical flow and the second optical flow, to obtain the first target image corresponding to the first target time.

In some embodiments, the performing a frame interpolation operation on the first image and the second image based on the first optical flow and the second optical flow includes: converting the first image into a first intermediate image based on the first optical flow; converting the second image into a second intermediate image based on the second optical flow; and merging the first intermediate image and the second intermediate image to obtain the first target image.

In some embodiments, the merging the first intermediate image and the second intermediate image to obtain the first target image includes: adjusting the first optical flow based on the first image, the first part of sensor data, and the first intermediate image, to obtain a first adjusted optical flow; converting the first image into a third intermediate image based on the first adjusted optical flow; and merging the third intermediate image and the second intermediate image to obtain the first target image.

In some embodiments, the merging the third intermediate image and the second intermediate image to obtain the first target image includes: adjusting the second optical flow based on the second image, the second part of sensor data, and the second intermediate image, to obtain a second adjusted optical flow; converting the second image into a fourth intermediate image based on the second adjusted optical flow; and merging the third intermediate image and the fourth intermediate image to obtain the first target image.

In some embodiments, the merging the third intermediate image and the fourth intermediate image to obtain the first target image includes: determining a first fusion weight for the third intermediate image and a second fusion weight for the fourth intermediate image, where the first fusion weight indicates an importance degree of a corresponding pixel in the third intermediate image, and the second fusion weight indicates an importance degree of a corresponding pixel in the fourth intermediate image; and performing weighted merging on the third intermediate image and the fourth intermediate image based on the first fusion weight and the second fusion weight, to obtain the first target image.

In some embodiments, the determining a first fusion weight and a second fusion weight includes: determining the first fusion weight based on the first image, the first part of sensor data, the first optical flow, and the first intermediate image; and determining the second fusion weight based on the second image, the second part of sensor data, the second optical flow, and the second intermediate image.

In some embodiments, the method further includes: organizing the first image, the second image, and the at least one target image into a target video clip in a time sequence.

In some embodiments, the first image and the second image respectively include a first video frame at the first time and a second video frame at the second time in a video clip. In some embodiments, the first image and the second image each include a static image captured by a static imaging apparatus.

In some embodiments, the determining at least one target image based on the first image, the second image, and the sensor data includes: applying the first image, the second image, and the sensor data to a trained video frame interpolation model to obtain the at least one target image output by the video frame interpolation model.

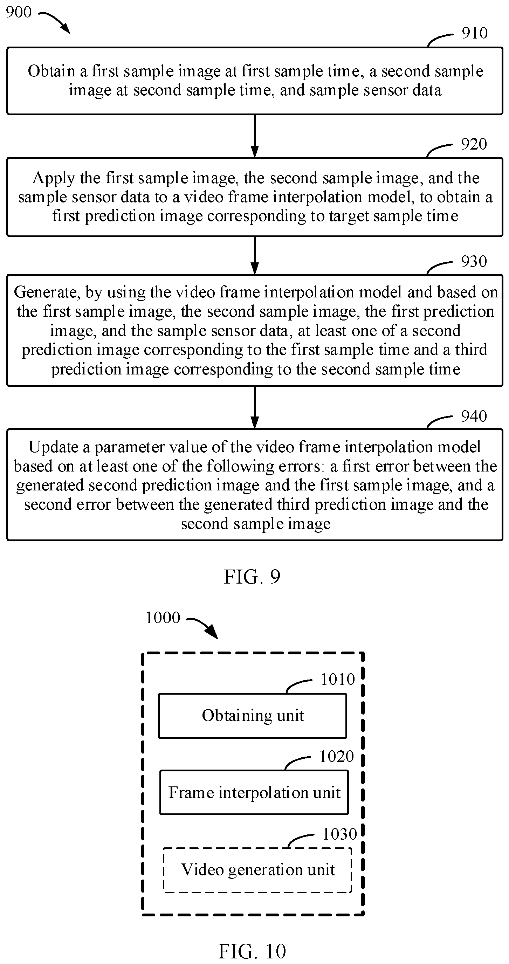

FIG. 9 is a flowchart of a video frame interpolation model training process 900 according to the invention. The process 900 may be implemented, for example, at the model training apparatus 510 in FIG. 5. For ease of description, the following describes the process 900 with reference to FIG. 5.

In a block 910, the model training apparatus 510 obtains a first sample image at first sample time, a second sample image at second sample time, and sample sensor data, where the sample sensor data includes dynamic event data between the first sample time and the second sample time. In a block 920, the model training apparatus 510 applies the first sample image, the second sample image, and the sample sensor data to a video frame interpolation model, to obtain a first prediction image corresponding to target sample time, where the target sample time is between the first sample time and the second sample time. In a block 930, the model training apparatus 510 generates, by using the video frame interpolation model and based on the first sample image, the second sample image, the first prediction image, and the sample sensor data, at least one of a second prediction image corresponding to the first sample time and a third prediction image corresponding to the second sample time. In a block 940, the model training apparatus 510 updates a parameter value of the video frame interpolation model based on at least one of the following errors: a first error between the generated second prediction image and the first sample image, and a second error between the generated third prediction image and the second sample image.

In some embodiments, the generating at least one of a second prediction image and a third prediction image includes at least one of the following: applying the second sample image, the first prediction image, and the sample sensor data to the video frame interpolation model to obtain the second prediction image; and applying the first sample image, the first prediction image, and the sample sensor data to the video frame interpolation model to obtain the third prediction image.

In some embodiments, the applying the second sample image, the first prediction image, and the sample sensor data to the video frame interpolation model to obtain the second prediction image includes: performing the following operations by using the video frame interpolation model: determining a first sample optical flow from the first sample time to the target sample time based on a first part of sample sensor data in the sample sensor data, where the first part of sample sensor data includes dynamic event data between the first sample time and the target sample time; determining a second sample optical flow from the first sample time to the second sample time based on the sample sensor data; and performing, based on the first sample optical flow and the second sample optical flow, a frame interpolation operation on the first prediction image and the second sample image, to obtain the second prediction image corresponding to the first sample time.

In some embodiments, the applying the first sample image, the first prediction image, and the sample sensor data to the video frame interpolation model to obtain the third prediction image includes: performing the following operations by using the video frame interpolation model: determining a third sample optical flow from the second sample time to the target sample time based on a second part of sample sensor data in the sample sensor data, where the second part of sample sensor data includes dynamic event data between the target sample time and the second sample time; determining a fourth sample optical flow from the second sample time to the first sample time based on the sample sensor data; and performing, based on the third sample optical flow and the fourth sample optical flow, a frame interpolation operation on the first prediction image and the fourth sample image, to obtain the third prediction image corresponding to the second sample time.

Example apparatus and device

FIG. 10 is a schematic block diagram of a video frame interpolation apparatus 1000 according to some embodiments of this disclosure. The apparatus 1000 may be implemented or included in the video frame interpolation apparatus 130 in FIG. 1.

The apparatus 1000 may include a plurality of modules for performing corresponding steps in the process 800 discussed in FIG. 8. As shown in FIG. 10, the apparatus 1000 includes: an obtaining unit 1010, configured to obtain a first image at first time, a second image at second time, and sensor data captured by a dynamic vision sensor apparatus, where the sensor data includes dynamic event data between the first time and the second time; and a frame interpolation unit 1020, configured to determine at least one target image based on the first image, the second image, and the sensor data, where the at least one target image is an image corresponding to at least one target time between the first time and the second time.

In some embodiments, the at least one target image includes a first target image corresponding to first target time between the first time and the second time, and the frame interpolation unit 1020 includes: a first optical flow determining unit, configured to determine, based on a first part of sensor data in the sensor data, a first optical flow from the first target time to the first time, where the first part of sensor data includes dynamic event data between the first time and the first target time; a second optical flow determining unit, configured to determine, based on a second part of sensor data in the sensor data, a second optical flow from the first target time to the second time, where the second part of sensor data includes dynamic event data between the first target time and the second time; and an optical flow frame interpolation unit, configured to perform a frame interpolation operation on the first image and the second image based on the first optical flow and the second optical flow, to obtain the first target image corresponding to the first target time.

In some embodiments, the optical flow frame interpolation unit includes: a first conversion unit, configured to convert the first image into a first intermediate image based on the first optical flow; a second conversion unit, configured to convert the second image into a second intermediate image based on the second optical flow; and an image merging unit, configured to merge the first intermediate image and the second intermediate image to obtain the first target image.

In some embodiments, the image merging unit includes: a first adjustment unit, configured to adjust the first optical flow based on the first image, the first part of sensor data, and the first intermediate image, to obtain a first adjusted optical flow; a first adjustment conversion unit, configured to convert the first image into a third intermediate image based on the first adjusted optical flow; and a first adjustment merging unit, configured to merge the third intermediate image and the second intermediate image to obtain the first target image.

In some embodiments, the first adjustment merging unit includes: a second adjustment unit, configured to adjust the second optical flow based on the second image, the second part of sensor data, and the second intermediate image, to obtain a second adjusted optical flow; a second adjustment conversion unit, configured to convert the second image into a fourth intermediate image based on the second adjusted optical flow; and a second adjustment merging unit, configured to merge the third intermediate image and the fourth intermediate image to obtain the first target image.

In some embodiments, the second adjustment merging unit includes: a weight determining unit, configured to determine a first fusion weight for the third intermediate image and a second fusion weight for the fourth intermediate image, where the first fusion weight indicates an importance degree of a corresponding pixel in the third intermediate image, and the second fusion weight indicates an importance degree of a corresponding pixel in the fourth intermediate image; and a weighted merging unit, configured to perform weighted merging on the third intermediate image and the fourth intermediate image based on the first fusion weight and the second fusion weight, to obtain the first target image.

In some embodiments, the weight determining unit includes: a first weight determining unit, configured to determine the first fusion weight based on the first image, the first part of sensor data, the first optical flow, and the first intermediate image; and a second weight determining unit, configured to determine the second fusion weight based on the second image, the second part of sensor data, the second optical flow, and the second intermediate image.

In some embodiments, as shown in FIG. 10, the apparatus 1000 may further include a video generation unit 1030, configured to organize the first image, the second image, and the at least one target image into a target video clip in a time sequence.

In some embodiments, the first image and the second image respectively include a first video frame at the first time and a second video frame at the second time in a video clip. In some embodiments, the first image and the second image each include a static image captured by a static imaging apparatus.

In some embodiments, the frame interpolation unit 1020 includes a model-based determining unit, configured to apply the first image, the second image, and the sensor data to a trained video frame interpolation model, to obtain at least one target image output by the video frame interpolation model.

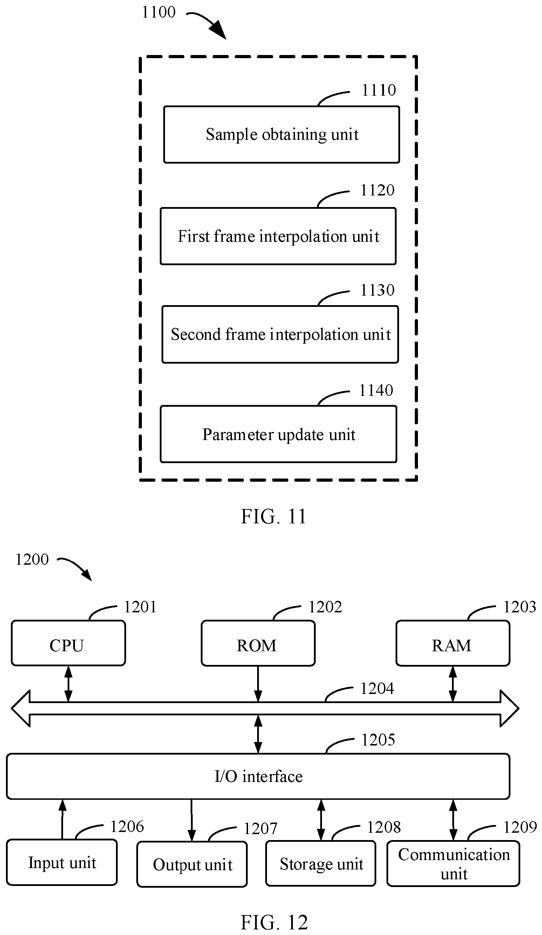

FIG. 11 is a schematic block diagram of a video frame interpolation apparatus 1100 according to some embodiments of this disclosure. The apparatus 1100 may be implemented or included in the model training apparatus 500 in FIG. 5.

The apparatus 1100 may include a plurality of modules for performing corresponding steps in the process 800 discussed in FIG. 8. As shown in FIG. 11, the apparatus 1100 includes a sample obtaining unit 1110, configured to obtain a first sample image at first sample time, a second sample image at second sample time, and sample sensor data, where the sample sensor data includes dynamic event data between the first sample time and the second sample time. The apparatus 1100 further includes a first frame interpolation unit 1120, configured to apply the first sample image, the second sample image, and the sample sensor data to a video frame interpolation model, to obtain a first prediction image corresponding to target sample time, where the target sample time is between the first sample time and the second sample time; and a second frame interpolation unit 1130, configured to generate, by using the video frame interpolation model and based on the first sample image, the second sample image, the first prediction image, and the sample sensor data, at least one of a second prediction image corresponding to the first sample time and a third prediction image corresponding to the second sample time. In addition, the apparatus 1100 further includes a parameter update unit 1140, configured to update a parameter value of the video frame interpolation model based on at least one of the following errors: a first error between the generated second prediction image and the first sample image, and a second error between the generated third prediction image and the second sample image.

In some embodiments, the second frame interpolation unit 1130 includes at least one of the following: a second prediction generation unit, configured to apply the second sample image, the first prediction image, and the sample sensor data to the video frame interpolation model to obtain the second prediction image; and a third prediction generation unit, configured to apply the first sample image, the first prediction image, and the sample sensor data to the video frame interpolation model to obtain the third prediction image.

In some embodiments, the second prediction generation unit is configured to perform the following operations by using the video frame interpolation model: determining a first sample optical flow from the first sample time to the target sample time based on a first part of sample sensor data in the sample sensor data, where the first part of sample sensor data includes dynamic event data between the first sample time and the target sample time; determining a second sample optical flow from the first sample time to the second sample time based on the sample sensor data; and performing, based on the first sample optical flow and the second sample optical flow, a frame interpolation operation on the first prediction image and the second sample image, to obtain the second prediction image corresponding to the first sample time.

In some embodiments, the third prediction generation unit is configured to perform the following operations by using the video frame interpolation model: determining a third sample optical flow from the second sample time to the target sample time based on a second part of sample sensor data in the sample sensor data, where the second part of sample sensor data includes dynamic event data between the target sample time and the second sample time; determining a fourth sample optical flow from the second sample time to the first sample time based on the sample sensor data; and performing, based on the third sample optical flow and the fourth sample optical flow, a frame interpolation operation on the first prediction image and the fourth sample image, to obtain the third prediction image corresponding to the second sample time.

FIG. 12 is a schematic block diagram of an example device 1200 that can be used to implement an embodiment of this disclosure. The device 1200 may be implemented or included in the video frame interpolation apparatus 130 in FIG. 1, or may be implemented or included in the model training apparatus 500 in FIG. 5.

As shown in the figure, the device 1200 includes a computing unit 1201 that may perform various appropriate actions and processing based on computer program instructions stored in a random access memory (RAM) and/or read-only memory (ROM) 1202 or computer program instructions loaded from a storage unit 1207 into the RAM and/or ROM 1202. The RAM and/or ROM 1202 may further store various programs and data for an operation of the device 1200. The computing unit 1201 and the RAM and/or ROM 1202 are connected to each other through a bus 1203. An input/output (I/O) interface 1204 is also connected to the bus 1203.

A plurality of components in the device 1200 are connected to the I/O interface 1204, and include: an input unit 1205, for example, a keyboard or a mouse; an output unit 1206, for example, any type of display or speaker; the storage unit 1207, for example, a magnetic disk or an optical disc; and a communication unit 1208, for example, a network interface card, a modem, or a wireless communication transceiver. The communication unit 1208 enables the device 1200 to exchange information/data with another device by using a computer network, for example, the Internet, and/or various telecommunication networks.

The computing unit 1201 may be any general-purpose and/or dedicated processing component with processing and computing capabilities. Some examples of the computing unit 1201 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, and microcontroller. The computing unit 1201 performs the methods and processing described above, for example, the process 800 and/or the process 900. For example, in some embodiments, the process 800 and/or the process 900 may be implemented as a computer software program, which is tangibly included in a computer-readable medium, for example, the storage unit 1207. In some embodiments, the computer program may be partially or completely loaded and/or installed onto the device 1200 by using the RAM and/or ROM and/or the communication unit 1208. When a computer program is loaded into the RAM and/or ROM and executed by the computing unit 1201, one or more steps of the process 800 and/or the process 900 described above may be performed. Optionally, in another embodiment, the computing unit 1201 may be configured to perform the process 800 and/or the process 900 in any other appropriate manner (for example, through firmware).

Program code for implementing the method of this disclosure may be written in any combination of one or more programming languages. The program code may be provided to a processor or a controller of a general-purpose computer, a dedicated computer, or another programmable data processing apparatus, so that when the program code is executed by the processor or controller, the functions/operations specified in the flowchart and/or the block diagram are implemented. The program code may be completely executed on a machine, partially executed on a machine, partially executed on a machine as a stand-alone software package and partially executed on a remote machine, or completely executed on a remote machine or server.

In the context of this disclosure, a machine-readable medium or a computer-readable medium may be a tangible medium that may include or store programs for use by an instruction execution system, apparatus, or device or in combination with an instruction execution system, apparatus, or device. The computer-readable medium may be a machine-readable signal medium or a machine-readable storage medium. The computer-readable medium may include but is not limited to an electronic, magnetic, optical, electromagnetic, infrared, or semiconductor system, apparatus, or device, or any suitable combination of the foregoing content. A more specific example of the machine-readable storage medium includes an electrical connection based on one or more lines, a portable computer disk, a hard disk, a random access memory (RAM), a read-only memory (ROM), an erasable programmable read-only memory (EPROM or flash memory), an optical fiber, a compact disc read-only memory (CD-ROM), an optical storage device, a magnetic storage device, or any appropriate combination of the foregoing content.

In addition, although operations are described in a particular order, it should be understood as that it is required that the operations are performed in the shown particular order or in sequence, or it is required that all operations shown in the figures should be performed to achieve an expected result. In a specific environment, multi-task and parallel processing may be advantageous. Similarly, although several specific implementation details are included in the foregoing description, these should not be construed as limiting the scope of this disclosure. Some features described in the context of an individual embodiment may alternatively be implemented in combination in a single implementation. On the contrary, various features described in the context of a single implementation may alternatively be implemented in a plurality of implementations individually or in any appropriate sub-combination.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. A video frame interpolation model training method performed by a video frame interpolation model training apparatus, the method comprising the steps of:

   • obtaining (step 910) a first sample image at first sample time, a second sample image at second sample time, and sample sensor data,

      ◦ wherein the sample sensor data comprise dynamic event data between the first sample time and the second sample time,
      ◦ wherein the dynamic event data indicate reciprocating motion information between the first sample image and the second sample image, the reciprocating motion information being information about reciprocal motions of an object in a scene, the reciprocal motions of the object being a repetitive forward and backward movement of the object;

   • applying (step 920) the first sample image, the second sample image, and the sample sensor data to a video frame interpolation model, to obtain a first prediction image corresponding to target sample time, wherein the target sample time is between the first sample time and the second sample time;
   • generating (step 930), by using the video frame interpolation model and based on the first sample image, the second sample image, the first prediction image, and the sample sensor data, at least one of a second prediction image corresponding to the first sample time and a third prediction image corresponding to the second sample time,
   wherein the generating at least one of the second prediction image and the third prediction image comprises at least one of the following:

      ◦ applying the second sample image, the first prediction image, and the sample sensor data to the video frame interpolation model to obtain the second prediction image; and
      ◦ applying the first sample image, the first prediction image, and the sample sensor data to the video frame interpolation model to obtain the third prediction image; and

   • updating (step 940) a parameter value of the video frame interpolation model based on at least one of the following errors: a first error between the generated second prediction image and the first sample image, and a second error between the generated third prediction image and the second sample image.

2. A video frame interpolation model training apparatus configured to perform the method according to claim 1.

3. A computer readable medium comprising instructions, wherein, when the instructions are executed by a video frame interpolation model training apparatus, the video frame interpolation model training apparatus is caused to perform the method according to claim 1.

## Patentansprüche

1. Verfahren zum Trainieren eines Videorahmeninterpolationsmodells, das durch eine Vorrichtung zum Trainieren eines Videorahmeninterpolationsmodells durchgeführt wird, wobei das Verfahren die folgenden Schritte umfasst:

   • Erlangen (Schritt 910) eines ersten Abtastbildes zu einer ersten Abtastzeit, eines zweiten Abtastbildes zu einer zweiten Abtastzeit, und von Abtastsensordaten,

      ◦ wobei die Abtastsensordaten dynamische Ereignisdaten zwischen der ersten Abtastzeit und der zweiten Abtastzeit umfassen,

◦ wobei die dynamischen Ereignisdaten Hin- und Herbewegungsinformationen zwischen dem ersten Abtastbild und dem zweiten Abtastbild anzeigen, wobei die Hin- und Herbewegungsinformationen Informationen über Hin- und Herbewegungen eines Objekts in einer Szene sind, wobei die Hin- und Herbewegungen des Objekts eine sich wiederholende Vorwärts- und Rückwärtsbewegung des Objekts sind;

• Anwenden (Schritt 920) des ersten Abtastbildes, des zweiten Abtastbildes und der Abtastsensordaten auf ein Videorahmeninterpolationsmodell, um ein erstes Vorhersagebild zu erlangen, das der Zielabtastzeit entspricht, wobei die Zielabtastzeit zwischen der ersten Abtastzeit und der zweiten Abtastzeit liegt;

• Erzeugen (Schritt 930) mindestens eines von einem zweiten Vorhersagebild, das der ersten Abtastzeit entspricht, und einem dritten Vorhersagebild, das der zweiten Abtastzeit entspricht, unter Verwendung des Videorahmeninterpolationsmodells und basierend auf dem ersten Abtastbild, dem zweiten Abtastbild, dem ersten Vorhersagebild und den Abtastsensordaten,

wobei das Erzeugen von mindestens einem von dem zweiten Vorhersagebild und dem dritten Vorhersagebild mindestens eines der Folgenden umfasst:

◦ Anwenden des zweiten Abtastbildes, des ersten Vorhersagebildes und der Abtastsensordaten auf das Videorahmeninterpolationsmodell, um das zweite Vorhersagebild zu erlangen; und

◦ Anwenden des ersten Abtastbildes, des ersten Vorhersagebildes und der Abtastsensordaten auf das Videorahmeninterpolationsmodell, um das dritte Vorhersagebild zu erlangen; und

• Aktualisieren (Schritt 940) eines Parameterwerts des Videorahmeninterpolationsmodells basierend auf mindestens einem der folgenden Fehler: einem ersten Fehler zwischen dem erzeugten zweiten Vorhersagebild und dem ersten Abtastbild und einem zweiten Fehler zwischen dem erzeugten dritten Vorhersagebild und dem zweiten Abtastbild.

2. Vorrichtung zum Trainieren eines Videorahmeninterpolationsmodells, die dazu konfiguriert ist, das Verfahren gemäß Anspruch 1 durchzuführen.

3. Computerlesbares Medium, das Anweisungen umfasst, wobei, wenn die Anweisungen durch eine Vorrichtung zum Trainieren eines Videorahmeninterpolationsmodells ausgeführt werden, die Vorrichtung zum Trainieren eines Videorahmeninterpolationsmodells veranlasst wird, das Verfahren gemäß Anspruch 1 durchzuführen.

**Revendications**

1. Procédé d'apprentissage de modèle d'interpolation de trames vidéo réalisé par un appareil d'apprentissage de modèle d'interpolation de trames vidéo, le procédé comprenant les étapes suivantes :

• l'obtention (étape 910) d'une première image d'échantillon à un premier instant d'échantillonnage, d'une seconde image d'échantillon au second instant d'échantillonnage et de données de capteur d'échantillon,

◦ dans lequel les données de capteur d'échantillon comprennent des données d'événement dynamiques entre le premier instant d'échantillonnage et le second instant d'échantillonnage,
◦ dans lequel les données d'événement dynamique indiquent des informations de mouvement alternatif entre la première image d'échantillon et la seconde image d'échantillon, les informations de mouvement alternatif étant des informations sur les mouvements alternatifs d'un objet dans une scène, les mouvements alternatifs de l'objet étant un mouvement répétitif vers l'avant et vers l'arrière de l'objet ;

• l'application (étape 920) de la première image d'échantillon, de la seconde image d'échantillon, et des données de capteur d'échantillon à un modèle d'interpolation de trames vidéo, pour obtenir une première image de prédiction correspondant à l'instant d'échantillonnage cible, dans lequel l'instant d'échantillonnage cible est compris entre le premier instant d'échantillonnage et le second instant d'échantillonnage ;

• la génération (étape 930), en utilisant le modèle d'interpolation de trames vidéo et sur la base de la première image d'échantillon, de la seconde image d'échantillon, de la première image de prédiction et des données de capteur d'échantillon, d'au moins l'une d'une deuxième image de prédiction correspondant au premier instant d'échantillonnage et une troisième image de prédiction correspondant au second instant d'échantillonnage, dans lequel la génération d'au moins l'une de la deuxième image de prédiction, et de la troisième image de prédiction comprend au moins l'un des éléments suivants :

◦ l'application de la seconde image d'échantillon, de la première image de prédiction, et des données du capteur d'échantillon au modèle d'interpolation de trames vidéo pour obtenir la deuxième image de prédiction ; et
◦ l'application de la première image d'échantillon, de la première image de prédiction, et des données du capteur d'échantillon au modèle d'interpolation de trames vidéo pour obtenir la troisième image de prédiction ; et

• la mise à jour (étape 940) d'une valeur de paramètre du modèle d'interpolation de trames vidéo sur la base d'au moins l'une des erreurs suivantes : une première erreur entre la deuxième image de prédiction générée et la première image d'échantillon, et une seconde erreur entre la troisième image de prédiction générée et la seconde image d'échantillon.

2. Appareil d'apprentissage de modèle d'interpolation de trames vidéo configuré pour réaliser le procédé selon la revendication 1.

3. Support lisible par ordinateur comprenant des instructions, dans lequel, lorsque les instructions sont exécutées par un appareil d'apprentissage de modèle d'interpolation de trames vidéo, l'appareil d'apprentissage de modèle d'interpolation de trames vidéo est amené à réaliser le procédé selon la revendication 1.

100

120 — Dynamic vision sensor apparatus

Imaging apparatus — 110

112-N
112-3
112-2
112-1

122 — Dynamic event data

130 — Video frame interpolation apparatus

112-N
112-3
112-2
132-2
112-1
132-1

FIG. 1

FIG. 2

EP 4 344 227 B1

FIG. 3

FIG. 4

FIG. 5

FIG. 6

FIG. 7

FIG. 8

900 ⟍

910

Obtain a first sample image at first sample time, a second sample image at second sample time, and sample sensor data

920

Apply the first sample image, the second sample image, and the sample sensor data to a video frame interpolation model, to obtain a first prediction image corresponding to target sample time

930

Generate, by using the video frame interpolation model and based on the first sample image, the second sample image, the first prediction image, and the sample sensor data, at least one of a second prediction image corresponding to the first sample time and a third prediction image corresponding to the second sample time

940

Update a parameter value of the video frame interpolation model based on at least one of the following errors: a first error between the generated second prediction image and the first sample image, and a second error between the generated third prediction image and the second sample image

FIG. 9

1000 ⟍

1010

Obtaining unit

1020

Frame interpolation unit

1030

Video generation unit

FIG. 10

1100

1110

Sample obtaining unit

1120

First frame interpolation unit

1130

Second frame interpolation unit

1140

Parameter update unit

FIG. 11

1200

| 1201 | 1202 | 1203 |
|------|------|------|
| CPU | ROM | RAM |

1204

1205

I/O interface

| 1206 | 1207 | 1208 | 1209 |
|------|------|------|------|
| Input unit | Output unit | Storage unit | Communication unit |

FIG. 12

**EP 4 344 227 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Timelens: Event-based Video frame Interpolation. **STEPAN TULYAKOV**. Arxiv.org. Cornell University Library, 14 June 2021